Europäisches Patentamt

European Patent Office

Office européen des brevets

(19)

(11) **EP 0 847 344 B1**

(12) **EUROPÄISCHE PATENTSCHRIFT**

(45) Veröffentlichungstag und Bekanntmachung des Hinweises auf die Patenterteilung:
**15.03.2000   Patentblatt 2000/11**

(51) Int Cl.[7]: **B60R 22/46**

(86) Internationale Anmeldenummer:
**PCT/DE96/01577**

(21) Anmeldenummer: **96937165.7**

(22) Anmeldetag: **26.08.1996**

(87) Internationale Veröffentlichungsnummer:
**WO 97/08024 (06.03.1997 Gazette 1997/11)**

(54) **STEUERGERÄT ZUM BETÄTIGEN EINER AUSLÖSEEINRICHTUNG EINES GURTSTRAFFERS IN EINEM FAHRZEUG**

CONTROL UNIT DESIGNED TO ACTUATE A DEVICE FOR TRIGGERING A VEHICLE SAFETY BELT LOCKING DEVICE

UNITE DE COMMANDE CON UE POUR ACTIONNER UN DISPOSITIF SERVANT AU DECLENCHEMENT D'UN DISPOSITIF DE BLOCAGE DE CEINTURE DE SECURITE DANS UN VEHICULE

(84) Benannte Vertragsstaaten:
**DE FR GB IT SE**

(30) Priorität: **31.08.1995   DE 19532192**

(43) Veröffentlichungstag der Anmeldung:
**17.06.1998   Patentblatt 1998/25**

(73) Patentinhaber: **SIEMENS AKTIENGESELLSCHAFT**
**80333 München (DE)**

(72) Erfinder: **GERING, Horst**
**D-93059 Regensburg (DE)**

(56) Entgegenhaltungen:
**DE-A- 3 621 580          US-A- 3 720 426**
**US-A- 5 225 985          US-A- 5 461 567**

EP 0 847 344 B1

**Beschreibung**

Die Erfindung betrifft ein Steuergerät zum Betätigen einer Auslöseeinrichtung eines Gurtstraffers in einem Fahrzeug.

Auslöseeinrichtungen von Gurtstraffern oder Blockierungseinrichtungen von Sicherheitsgurten in Fahrzeugen werden üblicherweise bei einem Frontoder Schrägaufprall zusätzlich zu Auslöseeinrichtungen von Airbags betätigt, um zu einem frühen Zeitpunkt ab Aufprallbeginn eine weitere Vorverlagerung von angegurteten Insassen zu verhindern. Damit werden die Insassen wirksam vor Verletzungen geschützt, die insbesondere durch einen Kopfaufschlag auf Innenteile oder das Durchtauchen des Insassen unter dem Gurt hervorgerufen werden.

Aus dem Artikel "Das neue Gurt-Straff-System von Volkswagen" der Autoren H. Müller, A. Enßlen, J. Günnewig, M. Specht und W. Krauss in der ATZ Automobiltechnischen Zeitschrift Nr. 96 (1994), Seite 546 bis 550, ist ein Steuergerät zum Betätigen einer Auslöseeinrichtung eines Gurtstraffers in einem Fahrzeug bekannt. Je ein Steuergerät ist dabei direkt bei einer Gurteinrichtung mit einem Sicherheitsgurt angeordnet. Jedes Steuergerät enthält eine als Feder-Masse-System ausgebildete mechanische Sensoreinrichtung, die für Fahrzeugverzögerungen empfindlich ist sowie eine pyrotechnisch arbeitenden Auslöseeinrichtung. Eine Treibladung der Auslöseeinrichtung wird bei Erkennen einer ausreichend starken Fahrzeugverzögerung, die durch einen Front-, Offset-, Pfahl- oder Schrägaufprall hervorgerufen wird, zu einem möglichst frühen Zeitpunkt ab Aufprallbeginn gezündet. Über eine seilbetätigte Kupplung wird der Sicherheitsgurt gestrafft.

Die DE 29 34 749 C2 offenbart ein Steuergerät zum Betätigen einer Blockierungseinrichtung eines Sicherheitsgurtes. Eine Sensoreinrichtung des Steuergeräts nimmt eine Fahrzeugverzögerung auf und betätigt bei Erkennen einer ausreichend starken Fahrzeugverzögerung einen Kontakt in einem Sicherheitsstromkreis der Blockierungseinrichtung. In der Blockierungseinrichtung wird durch Schließen des Kontakts eine elektromagnetische Spule erregt und dadurch ein Anker bewegt, der eine mechanische Gurtbandblockierung des Sicherheitsgurtes bewirkt.

Aus der DE 36 21 580 C2 ist ein Steuergerät zum Betätigen einer Auslöseeinrichtung eines Gurtstraffers bei einem Frontoder Schrägaufprall bekannt. Ein von einer Sensoreinrichtung geliefertes Beschleunigungssignal, das durch positive und negative Beschleunigungen des Fahrzeugs in Richtung seiner Längsachse bestimmt ist, wird in einer Auswerteschaltung ausgewertet. Das ausgewertete Signal wird mit einem Schwellwert verglichen. Bei Überschreiten des Schwellwerts durch das ausgewertete Signal wird von der Auswerteeinrichtung ein Auslösesignal für die Auslöseeinrichtung erzeugt. Der Schwellwert weist das für die negative Fahrzeugbeschleunigung vorgesehene Vorzeichen auf, sodaß nur eine ausreichende negative Fahrzeugbeschleunigung/Verzögerung - wie sie für einen Frontoder Seitenaufprall typisch ist - zu einer Auslösung führen kann.

Der Erfindung liegt das Problem zugrunde, angegurtete Insassen in einem Fahrzeug wirksam bei einem Aufprall zu schützen.

Das Problem wird erfindungsgemäß durch die Merkmale des Patentanspruchs 1 gelöst.

Bislang werden Gurtstraffer oder Blockierungseinrichtungen für Sicherheitsgurte nur bei einem ausreichend schweren Front- oder Schrägaufprall ausgelöst. Erfindungsgemäß werden nun Gurtstraffer, Blockierungseinrichtungen oder ähnliche Einrichtungen für Sicherheitsgurte, die im folgenden unter dem Begriff Gurtstraffer subsumiert werden, auch dann ausgelöst, wenn ein ausreichend schwerer Heckaufprall erkannt wird.

Bei einem Heckaufprall wird der Insasse zunächst gegen seinen Fahrzeugsitz gedrückt und erst zu einem späteren Zeitpunkt aus seinem Fahrzeugsitz vorverlagert. Eine Sensoreinrichtung nimmt dazu eine Fahrzeugbeschleunigung in Richtung der Fahrzeuglängsachse auf und liefert ein Beschleunigungssignal. Wird eine positive Fahrzeugbeschleunigung erkannt, die z.B. durch "Gas geben" oder einen Heckaufprall hervorgerufen wird, beginnt eine Auswerteschaltung mit der Auswertung des Beschleunigungssignals, vergleicht das ausgewertete Signal mit einem Schwellwert und löst bei Überschreiten des Schwellwerts durch das ausgewertete Signal eine Auslöseeinrichtung des Gurtstraffers aus. Der Schwellwert weist dabei das für die positive Fahrzeugbeschleunigung vorgesehene Vorzeichen auf. Damit wird der Insasse auch bei einem Heckaufprall wirksam vor Verletzungen geschützt.

In der Praxis liegt dann ein schwerer Heckaufprall vor, bei dem der Gurtstraffer ausgelöst werden soll, wenn beispielsweise der Aufprall durch ein etwa 1100 Kilogramm schweres Fahrzeug mit einer Geschwindigkeit von etwa 50 km/h erfolgt. In der Regel ist es nicht notwendig, bei einem schweren Heckaufprall einen Airbag zusätzlich zum Gurtstraffer auszulösen, da der größte Anteil der durch den Aufprall auf den Insassen übertragenen Energie durch eine Rückverlagerung des Insassen gegen den Fahrzeugsitz abgebaut wird, bevor der Insasse vorverlagert wird.

Vorteilhafte Weiterbildungen der Erfindung sind in den Unteransprüchen gekennzeichnet.

Vorzugsweise wird das ausgewertete Signal durch das zeitlich integrierte und daraufhin mit einer Zeitfunktion gewichtete Beschleunigungssignal gebildet.

Durch die zeitliche Integration des Beschleunigungssignals gehen Unregelmäßigkeiten im Beschleunigungssignal wie z.B. Schwingungen oder kurzzeitige Spitzen nur mit einem geringen Beitrag in das ausgewertete Signal ein. Damit wird eine durch solche Schwingungen oder kurzzeitige Spitzen hervorgerufene Fehlauslösung verhindert.

Der Insasse wird zu einem relativ späten Zeitpunkt ab Aufprallbeginn aus seinem Fahrzeugsitz vorverlagert. Zu diesem Zeitpunkt hat die mittlere Fahrzeugbeschleunigung bereits ihr Maximum überschritten. Damit ist es vorteilhaft, das zeitliche Integral über das Beschleunigungssignal mit einer Zeitfunktion zu gewichten, um zeitoptimal auslösen zu können.

Vorzugsweise weist also die Zeitfunktion zu späteren Zeitpunkten mehr Gewicht auf als zu frühen Zeitpunkten.

Eine zeitoptimale - im Falle eines Heckaufpralls also relativ späte - Betätigung der Auslöseeinrichtung ist gegenüber einer vorzeitigen Auslösung vorteilhaft, da die Auswerteschaltung nun über eine lange Zeitspanne ab Aufprallbeginn verfügt, in der sie aus dem Verlauf der Fahrzeugbeschleunigung einen schweren Heckaufprall, bei dem ausgelöst werden soll, von einem minder schweren Heckaufprall, bei dem nicht ausgelöst werden soll, unterscheiden kann. Es kann damit eine Fehlauslösung aufgrund eines Heckaufpralls verhindert werden, der sich erst in mittleren und späten Abschnitten des zugehörigen Beschleunigungssignals als minder schwer herausstellt. Eine Fehlauslösung wiederum ist deshalb zu vermeiden, da insbesondere bei einer pyrotechnisch arbeitenden Auslöseeinrichtung Bestandteile des Gurtstraffers - wie z.B. ein Zündsatz - nach einer Betätigung des Gurtstraffers kostenintensiv ausgetauscht werden müssen, damit der Gurtstraffer weiterhin funktionstüchtig ist. Abgesehen davon soll eine bei einer Fehlauslösung durch eine Explosion des Zündsatzes unnötig hervorgerufene Lärmeinwirkung auf den Fahrer und die Insassen aus Sicherheitsgründen vermieden werden.

Die Zeitfunktion ist vorzugsweise linear ausgebildet. Damit erhält das Integral über das Beschleunigungssignal zu späten Zeitpunkten mehr Gewicht als zu frühen Zeitpunkten. Dies trägt dem Beginn der Insassenvorverlagerung zu einem relativ späten Zeitpunkt bei bereits abklingender mittlerer Fahrzeug) beschleunigung Rechnung und führt bei geeigneter Wahl des Schwellwerts zu einem optimalen Auslösezeitpunkt, der in der Praxis bei etwa 70 bis 80 ms ab Aufprallbeginn liegt. Der optimale Auslösezeitpunkt für Gurtstraffer bei einem Frontaufprall liegt vergleichsweise etwa bei etwa 20 bis 30 ms.

Wird das Beschleunigungssignal, das zeitlich integriert und mit einer Zeitfunktion gewichtet wird, vor seiner Integration mit einem additiven Korrekturterm versehen, kann das Auslösekriterium durch eine geeignete Wahl des Schwellwerts, des additiven Korrekturterms und der Zeitfunktion an unterschiedliche Fahrzeugtypen angepaßt werden. Ein geschickt gewählter additiver Korrekturterm kann auch dazu beitragen, einen schweren Heckaufprall von einem minderschweren Heckaufprall zu unterscheiden, selbst wenn sich schwerer und minderschwerer Heckaufprall in ihren zugehörigen Beschleunigungssignalen nur unwesentlich voneinander unterscheiden. Die Parameter Schwellwert, additiver Korrekturterm und auch die Zeitfunktion können mit Hilfe von Simulationsversuchen ermittelt werden.

Ein Ausführungsbeispiel der Erfindung ist im folgenden unter Bezugnahme auf die schematische Zeichnung näher erläutert. Es zeigen:

Figur 1: ein Blockschaltbild eines erfindungsgemäßen Steuergeräts,

Figur 2: einen Verlauf eines für einen Heckaufprall typischen Beschleunigungssignals a(t), und einen Verlauf eines aus dem Beschleunigungssignal a(t) ermittelten mittleren Beschleunigungssignals $\overline{a(t)}$, und

Figur 3: Verläufe zweier ausgewerteter Signale y1(t) und y2(t).

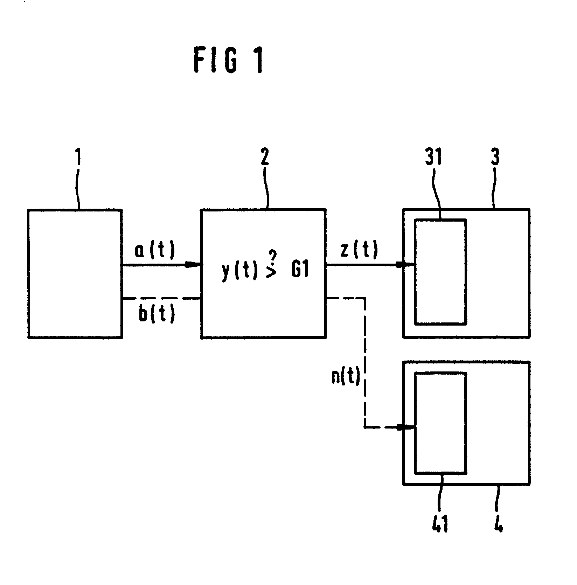

Figur 1 zeigt ein Blockschaltbild eines erfindungsgemäßen Steuergeräts mit einer Sensoreinrichtung 1, einer Auswerteschaltung 2, einem Gurtstraffer 3 mit einer Auslöseschaltung 31, und einem Rückhaltemittel 4 mit einer zugehörigen Auslöseschaltung 41.

Die Sensoreinrichtung 1 liefert ein Beschleunigungssignal a(t) an die Auswerteschaltung 2, das durch eine Beschleunigung des Fahrzeugs in Richtung seiner Längsachse bestimmt ist. Wenn die Auswerteschaltung 2 eine positive Fahrzeugbeschleunigung erkennt, wertet sie das Beschleunigungssignal a(t) aus und vergleicht das ausgewertete Signal y(t) mit einem Schwellwert G1, um bei Überschreiten des Schwellwerts G1 durch das ausgewertete Signal y(t) die Auslöseeinrichtung 31 des Gurtstraffers 3 mit einem Auslösesignal z(t) zu betätigen.

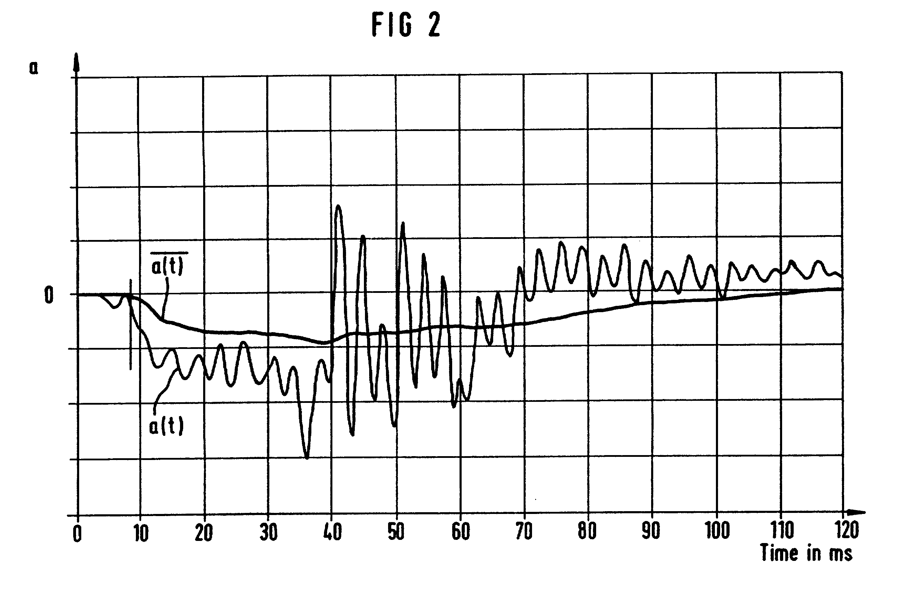

Figur 2 zeigt qualitativ einen Verlauf eines für einen Heckaufprall typischen Beschleunigungssignals a(t), und einen Verlauf eines aus dem Beschleunigungssignal a(t) ermittelten mittleren Beschleunigungssignals $\overline{a(t)}$. Das Beschleunigungssignal a(t) weist hier ein negatives Vorzeichen für eine positve Fahrzeugbeschleunigung auf.

Die Sensoreinrichtung 1 enthält beispielsweise einen linearen Beschleunigungssensor mit einer Empfindlichkeitsachse, die parallel zur Fahrzeuglängsachse angeordnet ist, oder auch zwei um einen Winkel zur Fahrzeuglängsachse versetzte lineare Beschleunigungssensor. Der Beschleunigungssensor kann nach dem kapazitiven, dem piezoresistiven oder einem sonstigen Prinzip arbeiten und liefert ein analoges oder quasi-analoges Signal.

Die Sensoreinrichtung 1 liefert das Beschleunigungssignal a(t), das entweder durch eine positive und eine negative Fahrzeugbeschleunigung, oder nur durch eine positive Fahrzeugbeschleunigung bestimmt ist. In ersterem Fall kann eine positive Fahrzeugbeschleunigung durch positive von der Sensoreinrichtung 1 gelieferte Spannungswerte und eine negative Fahrzeugbeschleunigung durch negative Spannungswerte gekennzeichnet sein. Eine positive Fahrzeugbeschleunigung kann aber auch durch einen ersten Bereich positiver Spannungswerte, eine negative Fahrzeugbeschleunigung durch einen zweiten Bereich positiver Spannungswerte gekennzeichnet sein. In jedem Fall kann die Sensoreinrichtung 1 oder die Auswerteschaltung 2 beispielsweise durch einen Vergleich des Beschleunigungssignals a(t) mit einem Erkennungsschwellwert erkennen, ob eine positive Fahrzeugbeschleunigung vorliegt.

Vorzugsweise bildet die Auswerteschaltung 2 ein erstes Überwachungssignal u(t), das mit einem zugehörigen Schwellwert G2 verglichen wird. Erst durch Überschreiten dieses Schwellwerts G2 durch das erste Überwachungssignal u(t) wird ein Startzeitpunkt ts definiert, zu dem mit der Auswertung des Beschleunigungssignals a(t) hinsichtlich eines Heckaufpralls durch die Auswerteschaltung 2 begonnen wird. Vorzugsweise ist das Überwachungssignal u(t) das Beschleunigungssignal a(t) selbst oder das zeilich integrierte Beschleunigungssignal a(t). Damit wird verhindert, daß bei einer sehr geringen positiven Fahrzeugbeschleunigung, die beispielsweise durch "Gas geben" hervorgerufen wird, der Auswerteprozeß gestartet wird.

Das Beschleunigungssignal a(t) wird durch die Auswerteschaltung 2 derart ausgewertet, daß ein Korrekturfaktor koff von dem Beschleunigungssignal a(t) abgezogen wird und das mit dem Korrekturfaktor koff versehene Beschleunigungssignal a(t) ab dem Startzeitpunkt ts zeitlich integriert und mit einer Zeitfunktion f(t) multipliziert wird. Die Zeitfunktion f(t) ist vorzugsweise linear, also f(t) = t, kann aber auch quadratisch ausgebildet sein, wenn beispielsweise der Gurtstraffer zu einem relativ frühen Zeitpunkt ausgelöst werden soll. Zum Startzeitpunkt ts beginnen die Zeitfunktion f(t) mit f(t=0) und das Integral zu laufen. Ab dem Startzeitpunkt ts wird das ausgewertete Signal

$$y(t) = t^* \int (a(t)\text{-koff})dt$$

gebildet und mit dem Schwellwert G1 verglichen.

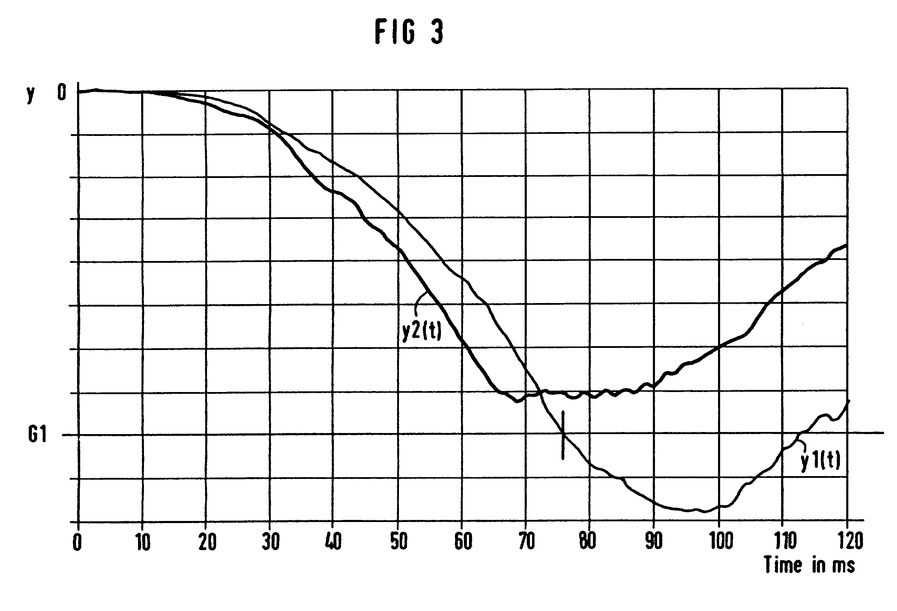

Figur 3 zeigt Verläufe zweier nach vorgenanntem Algorithmus ausgewerteter Signale y1(t) und y2(t) zusammen mit dem Schwellwert G1, wobei das ausgewertete Signal y1(t) den Schwellwert G1 überschreitet und damit einen schweren Heckaufprall kennzeichnet, und das ausgewertete Signal y2(t) den Schwellwert G1 nicht überschreitet und damit einen minder schweren Heckaufprall kennzeichnet. Eines der ausgewerteten Signale y1(t) und y2(t) kann beispielsweise auf einem Beschleunigungsverlauf gemäß Figur 2 beruhen. Damit weist auch das mit einer ansteigenden Zeitfunktion multipzierte Integral über dem Beschleunigungssignal als ausgewertetes Signal y(t) negative Werte auf. Dementsprechend ist der Schwellwert G1 negativ ausgebildet.

Der Schwellwert G1 kann zeitlich konstant oder auch zumindest anfangs zeitlich konstant und ab einem definierten Zeitpunkt zeitlich variabel sein und beispielsweise die Form einer Rampe aufweisen. Dabei kann der definierte Zeitpunkt wiederum von dem Beschleunigungssignal a(t) oder von einem aus dem Beschleunigungssignal abgeleiteten Signal abhängen.

Liefert die Sensoreinrichtung 1 ein Beschleunigungssignal a(t), das nicht nur durch eine positive sondern auch durch eine negative Fahrzeugbeschleunigung bestimmt ist, können Anteile des Beschleunigungssignals a(t), die eine negative Fahrzeugbeschleunigung kennzeichnen, bei der Integralbildung berücksichtigt werden. Diese Anteile können bei einem Heckaufprall durchaus auftreten, beispielsweise bei stark ausgebildeten Schwingungen im Beschleunigungssignal a(t). Diese Anteile liefern Beiträge mit umgekehrtem Vorzeichen zum Integral. Damit wird beispielsweise ein durch eine positive Fahrzeugbeschleunigung aufgebauter Integralwert wieder verringert. Negative Beiträge im Beschleunigungssignal verringern also die Wahrscheinlichkeit, daß das ausgewertete Signal den Schwellwert übersteigt. Überwiegen die negativen Beiträge die positiven Beiträge, so wird der Gurtstrammer jedoch nicht ausgelöst, da zum Auslösen bei einem Heckaufprall kein Schwellwert vorgesehen ist, der den Beiträgen von Fahrzeugverzögerungen zugeordnet ist.

Durch eine geschickte Wahl des additiven Korrekturterms koff kann dieser Effekt ausgenutzt werden, um einen schweren Heckaufprall von einem minderschweren Heckaufprall unterscheiden zu können, selbst wenn sich die zugehörigen Beschleunigungssignale nur geringfügig unterscheiden: Typischerweise weist ein durch einen minder schweren Heckaufprall hervorgerufenes erstes Beschleunigungssignal in seiner Anfangsphase geringere Amplituden und ab einem Zeitpunkt von etwa 40 ms bis hin zu zu einem Zeitpunkt von etwa 100 ms Schwingungen mit einer höheren Amplitude auf als ein durch einen schweren Heckaufprall hervorgerufenes zweites Beschleunigungssignal. Ein geeigneter Korrekturterm koff, der vom Beschleunigungssignal a(t) subtrahiert wird, verschiebt nun das erste Beschleunigungssignal so, daß insbesondere während seiner Anfangsphase eine negative Fahrzeugbeschleunigung vorgetäuscht wird, die wiederum negative Integralbeiträge zum ausgewerteten Signal liefert, wohingegen das zweite Beschleunigungssignal auch nach seiner Verschiebung durch den Korrekturterm koff positive Integralbeiträge liefert. Ebenfalls werden die stark ausgebildeten Schwingungen des ersten Beschleunigungssignals negative Integralbeiträge liefern, wohingegen die schwach ausgebildeten Schwingungen des zweiten Beschleunigungssignals auch nach Abzug des Korrekturterms koff positive Integralbeiträge liefern.

Vorzugsweise wird die Auswertung des Beschleunigungssignals a(t) durch die Auswerteschaltung 2 zu einem Endzeitpunkt te abgebrochen, der durch das Unterschreiten eines Schwellwerts G3 für eine Zeitspanne tx durch ein zweites Überwachungssignal v(t) bestimmt ist. Das zweite Überwachungssignal v(t) wird dabei durch die zeitliche Integration über das Beschleunigungssignal a(t) gebildet, wobei das Beschleunigungssignal a(t) auch mit dem additiven Korrekturterm koff versehen werden kann. Die Festsetzung des Endzeitpunkts te ist insofern vorteilhaft, da die Zeitfunktion f(t) mit zunehmender Zeit große Beiträge liefert, die mit der integrierten Fahrzeugbeschleunigung multipliziert werden, sodaß die Gefahr besteht, daß das ausgewertete Signal y(t) den Schwellwert G1 zu einem sehr späten Zeitpunkt übersteigt und der Gurtstraffer nur aufgrund eines großen Beitrags der Zeitfunktion f(t) zum ausgewerteten Signal y(t), nicht aber aufgrund eines ausreichend starken Beschleunigungssignals a(t) ausgelöst wird.

Mit den Parametern Korrekturterm koff, sämtlichen Schwellwerten G1, G2, G3 und der Ausbildung der Zeitfunktion f(t) kann der optimale Auslösezeitpunkt beeinflußt werden und die Auswertung des Beschleunigungssignals a(t) an individuelle Fahrzeugeigenschaften angepaßt werden.

Vorzugsweise enthält die Auswerteschaltung 2 einen Mikroprozessor. Vor der Auswertung des Beschleunigungssignals a(t) im Mikroprozessor wird das Beschleunigungssignal a(t) gefiltert und abgetastet. Der Mikroprozessor kann auch das Beschleunigungssignal a(t) bzw. ein weiteres von der Sensoreinrichtung 1 geliefertes Signal b(t) (Figur 1) nach weiteren Algorithmen auswerten - und zwar parallel zur Auswertung des Beschleunigungssignals a(t) hinsichtlich eines Heckaufpralls - , sodaß beispielsweise bei Überschreiten eines weiteren Schwellwerts G4 durch ein weiteres ausgwertetes Signal m(t) ein weiteres Auslösesignal n(t) für eine Auslöseeinrichtung 41 eines Rückhaltemittes 4 des Fahrzeugs erzeugt wird. Das Rückhaltemittel 4 kann beispielsweise ein Fahrer- oder Beifahrerairbag sein, ein Seitenairbag oder der Gurtstraffer, der auch bei einem Front- oder Schrägaufprall ausgelöst werden soll. Das Steuergerät mit seiner Sensoreinrichtung und seiner Auswerteschaltung ist vorzugsweise zentral im Fahrzeug angeordnet.

**Patentansprüche**

1. Steuergerät zum Betätigen einer Auslöseeinrichtung eines Gurtstraffers in einem Fahrzeug bei einem Heckaufprall,

   - mit einer Sensoreinrichtung (1), von der ein Beschleunigungssignal (a(t)) geliefert wird, das zumindest durch die positive Beschleunigung des Fahrzeugs in Richtung seiner Längsachse bestimmt ist,
   - mit einer Auswerteschaltung (2), in der das Beschleunigungssignal (a(t)) ausgewertet und das ausgewertete Signal (y(t)) mit einem Schwellwert verglichen wird, und von der bei Überschreiten des Schwellwerts (G1) durch das ausgewertete Signal (y(t)) ein Auslösesignal (z(t)) für die Auslöseeinrichtung (31) erzeugt wird,
   - bei dem der Schwellwert (G1) das für die positive Fahrzeugbeschleunigung vorgesehene Vorzeichen aufweist.

2. Steuergerät nach Anspruch 1, bei dem das Beschleunigungssignal durch die positive und negative Beschleunigung des Fahrzeugs bestimmt ist, und bei dem die Auswertung des Beschleunigungssignals aufgenommen wird, wenn eine positive Fahrzeugbeschleunigung erkannt wird.

3. Steuergerät nach Anspruch 1, bei dem das Beschleunigungssignal (a(t)) in der Auswerteschaltung (2) zeitlich integriert und mit einer Funktion (f(t)) gewichtet wird, die zu späten Zeitpunkten mehr Gewicht aufweist als zu frühen Zeitpunkten.

4. Steuergerät nach Anspruch 1, bei dem in der Auswerteschaltung (2) das mit einem additiven Korrekturterm (koff) versehene Beschleunigungssignal (a(t)) integriert und mit einer Zeitfunktion (f(t)) gewichtet wird.

5. Steuergerät nach Anspruch 3 oder Anspruch 4, bei dem die Funktion als lineare Zeitfunktion (f(t)) ausgebildet ist.

6. Steuergerät nach Anspruch 1, bei dem das ausgewertete Signal (y(t)) erst ab einem Startzeitpunkt (ts) durch die Auswerteschaltung (2) gebildet wird, zu dem ein von dem Beschleunigungssignal (a(t)) abhängiges erstes Überwachungssignal (u(t)) einen ihm zugeordneten Schwellwert (G2) überschreitet.

7. Steuergerät nach Anspruch 6, bei dem das erste Überwachungssignal (u(t)) das Beschleunigungssignal (a(t))ist.

8. Steuergerät nach Anspruch 1, bei dem das ausgewertete Signal (y(t)) ab einem Endzeitpunkt (te) nicht mehr durch die Auswerteschaltung (2) ausgewertet wird, zu dem ein von dem Beschleunigungssignal (a(t)) abhängiges zweites Überwachungssignal (v(t)) einen ihm zugeordneten Schwellwert (G3) für eine definierte Zeitspanne (tx) unterschreitet.

9. Steuergerät nach Anspruch 8, bei dem das zweite Überwachungssignal (v(t)) durch die zeitliche Integration des mit dem additiven Korrekturterm (koff) versehenen Beschleunigungssignals (a(t)) gebildet wird.

10. Steuergerät nach Anspruch 1, bei dem die Auswerteschaltung (2) einen Mikroprozessor enthält, bei dem zumindest ein weiteres-von der Sensoreinrichtung (1) geliefertes Signal (b(t)) von der Auswerteschaltung (2) auswertet wird, und bei dem bei Überschreiten eines zugehörigen Schwellwerts (G4) durch das weitere ausgewertete Signal (m(t)) ein weiteres Auslösesignal (n(t)) für eine Auslöseeinrichtung (41) eines Rückhaltemittels (4) des Fahrzeugs erzeugt wird.

**Claims**

1. Control unit for actuating a device for triggering a seat-belt pretensioning device in a vehicle in the event of a rear-end impact,

   - having a sensor device (1), by which an acceleration signal (a(t)) is supplied which is determined at least by the positive acceleration of the vehicle in the direction of its longitudinal axis,
   - having an evaluation circuit (2) in which the acceleration signal (a(t)) is evaluated and the evaluated signal (y(t)) is compared with a threshold value, and by which a triggering signal (z(t)) is generated for the triggering device (31) in the event of the threshold value (G1) being exceeded by the evaluated signal (y(t)), - in which the threshold value (G1) has the sign provided for the positive vehicle acceleration.

2. Control unit as claimed in Claim 1, in which the acceleration signal is determined by the positive and negative acceleration of the vehicle, and in which the evaluation of the acceleration signal is started if a positive vehicle acceleration is detected.

3. Control device as claimed in Claim 1, in which the acceleration signal (a(t)) is integrated with respect to time in the evaluation circuit (2) and weighted with a function (f(t)) which has more weighting at late times than at early times.

4. Control device as claimed in Claim 1, in which the acceleration signal (a(t)) which is provided with an additive correction time (koff) is integrated in the evaluation circuit (2) and weighted with a time function (f(t)).

5. Control unit as claimed in Claim 3 or 4, in which the function is designed as a linear time function (f(t)).

6. Control unit as claimed in Claim 1, in which the evaluated signal (y(t)) is formed by the evaluation circuit (2) only starting from a starting time (ts) at which a first monitoring signal (u(t)) which is dependent on the acceleration signal (a(t)) exceeds a threshold value (G2) assigned to it.

7. Control unit as claimed in Claim 6, in which the first monitoring signal (u(t)) is the acceleration signal (a (t)).

8. Control unit as claimed in Claim 1, in which the evaluated signal (y(t)) is no longer evaluated by the evaluation circuit (2) starting from an end time (te) at which a second monitoring signal (v(t)) which is dependent on the acceleration signal (a(t)) drops, for a defined time period (tx), below a threshold value (G3) assigned to it.

9. Control unit as claimed in Claim 8, in which the second monitoring signal (v(t)) is formed by the integration over time of the acceleration signal (a(t)) provided with the additive correction term (koff).

10. Control unit as claimed in Claim 1, in which the evaluation circuit (2) contains a microprocessor in which at least one further signal (b(t)) supplied by the sensor device (1) is evaluated by the evaluation device (2), and in which a further trigger signal (n(t)) is generated for a triggering device (41) of a restraining means (4) of the vehicle if an associated threshold value (G4) is exceeded by the further evaluated signal (m(t)).

**Revendications**

1. Appareil de commande pour actionner un dispositif de déclenchement d'un tendeur de ceinture de sécurité dans un véhicule automobile en cas de choc à l'arrière, comportant

   - un dispositif détecteur (1) par lequel est émis un signal d'accélération (a(t)) qui est déterminé au moins par l'accélération positive du véhicule automobile dans la direction de son axe longitudinal,
   - un circuit d'interprétation (2) dans lequel le signal d'accélération (a(t)) est interprété et dans lequel le signal interprété (y(t)) est comparé à une valeur de seuil, et par lequel, en cas de dépassement de la valeur de seuil (G1) par le signal interprété (y(t)), un signal de déclenchement (z(t)) est produit pour le dispositif de déclenchement (31),
   - la valeur de seuil (G1) présentant le signe prévu pour l'accélération positive du véhicule automobile.

2. Appareil de commande suivant la revendication 1, pour lequel le signal d'accélération est déterminé par l'accélération positive et l'accélération négative du véhicule automobile, et l'interprétation du signal d'accélération est effectuée si une accélération positive du véhicule automobile est détectée.

3. Appareil de commande suivant la revendication 1, pour lequel le signal d'accélération (a(t)) est intégré en fonction du temps dans le circuit d'interprétation (2) et est pondéré avec une fonction (f(t)) qui présente, à des instants tardifs, plus de poids qu'aux instants précoces.

4. Appareil de commande suivant la revendication 1, pour lequel, dans le circuit d'interprétation (2), le signal d'accélération (a(t)), affecté d'un terme correctif additionnel (koff), est intégré et est pondéré avec une fonction de temps (f(t)).

5. Appareil de commande suivant la revendication 3 ou la revendication 4, pour lequel la fonction est réalisée sous la forme d'une fonction de temps linéaire (f(t)).

6. Appareil de commande suivant la revendication 1, pour laquelle le signal interprété (y(t)) est formé seulement par le circuit d'interprétation (2) à partir d'un instant de démarrage (ts), auquel un premier signal de contrôle (u(t)), dépendant du signal d'accélération a(t), dépasse une valeur de seuil (G2) qui lui est associée.

7. Appareil de commande suivant la revendication 6, pour lequel le premier signal de contrôle (u(t)) est le signal d'accélération (a(t)).

8. Appareil de commande suivant la revendication 1, pour lequel le signal interprété (y(t)) n'est plus interprété par le circuit d'interprétation (2) à partir d'un instant final (te), auquel un deuxième signal de contrôle (v(t)), dépendant du signal d'accélération (a(t)), dépasse une valeur de seuil (G3) pour une période de temps (tx) définie.

9. Appareil de commande suivant la revendication 8, pour lequel le deuxième signal de contrôle (v(t)) est formé par l'intégration en fonction du temps du signal d'accélération (a(t)) affecté du terme correctif additionnel (koff).

10. Appareil de commande suivant la revendication 1, pour lequel le circuit d'interprétation (2) comporte un microprocesseur, au moins un autre signal (b(t)) fourni par le dispositif de détection (1) est interprété par le circuit d'interprétation (2), et en cas de dépassement d'une valeur de seuil (G4) associée par l'autre signal interprété (m(t)), un autre signal de déclenchement (n(t)) est produit pour un dispositif de déclenchement (41) d'un moyen de retenue vers l'arrière (4).

# FIG 1

FIG 2

# FIG 3

EP 0 847 344 B1